# EUROPEAN PATENT APPLICATION

(11) **EP 4 345 437 A1**
(43) Date of publication of application: **03.04.2024**
(21) Application number: 23199130.8
(22) Date of filing: 22.09.2023
(51) Int. Cl.: G01M 3/36, B29C 49/78, G01M 99/00, G01N 3/08

(54) **TOP LOAD TESTING METHOD AND DEVICE FOR BLOW MOULDED CONTAINERS**

(30) Priority: 30.09.2022 NO 20221046
(71) Applicant: Delta Engineering Bvba, 9500 Ophasselt (BE)
(72) Inventor: de Bruyn, Danny, 9500 Ophasselt (BE)
(74) Representative: Curo AS

(57) **Abstract**

Method and device for determining the compliance of blow moulded containers (1) with respect to a requested top load performance, wherein the height of a blow moulded containers (1) is determined, a measuring head (4)connected applying an increasing force onto the top of the blow moulded container, the compression of the blow moulded containers (1) is continuously measured along with the force, wherein the application of the force is terminated before a nonlinear correlation between force and compression is recorded and an accept or non-accept signal is generated by comparison with stored data.

## Description

The present invention concerns a method for the top load testing of blow moulded containers as indicated by the preamble of claim 1. According to another aspect the present invention concerns a device as indicated by the preamble of claim 9.

### Background

Top load testing of blow moulded bottles and other containers is essential for providing bottles and containers which are resistant to deformation when placed on top of each other. More businesses than ever are focused on protecting the environment by reducing overall packaging and making it more recyclable. Innovation through new materials and improved packaging design are contributing greatly to light-weighting and sustainability initiatives, but critically they must do this without compromising a container's overall strength or performance. Top-load testing is therefore a key method for performing quality control of blow moulded bottles and other containers.

Top load testing is sometimes referred to as column-crush, vertical load resistance or axial force resistance. Top load testing involves applying a downwards compressive force to a packaging container and measuring its resistance to deformation.

US 6473169 B1 discloses an integrated leak and vision inspection system that accurately and efficiently inspects a container for manufacturing defects. The system provides a series of visual inspection stations with cameras and lighting that are integrated onto a rotary inspection system for on-line inspection of containers. An additional feature of the leak and vision inspection system is disclosed, wherein the container can be tested for top load deflection of containers. A top load (vertical) force is applied to the container. If the container crushes or deflects under the vertical force, a sensor signal is generated and the container is rejected. The top load deflection test is a destructive test and is more time consuming than non-destructive tests performed at the visual inspection stations. The productivity of the rotary inspection system for on-line inspection of containers is therefore reduced if the top load deflection testing is included.

IN341519004 S and IN252613 S disclose top load testers suitable for top load testing of blow moulded bottles and other containers. The container has to be inserted manually in the top load testers and testing of a continuous flow of bottles or containers is not feasible.

It is therefore a need for a top load tester suitable for fast inline testing of a continuous flow of bottles or containers right after their manufacturing in a blow moulding machine.

### Objective

It is thus an objective of the present invention to provide a method for high voltage leak testing which does not increase the amount of negative charges on the outside of blow moulded plastic containers.

### The present invention

The above objective is achieved by the method according to the present invention as defined by claim 1.

A further aspect of the invention is the device disclosed in claim 9.

Preferred embodiments are disclosed by the dependent claims.

According to the present invention a method for determining the compliance of blow moulded containers with respect to a requested top load performance. The method comprises several steps, of which the first part is well known from mechanical testing of blow moulded containers. In the first part the height of a blow moulded container is determined. Thereafter the measuring head is connected to the top of the blow moulded container. The measuring head is designed to start pressing to the top of the blow moulded container. The force applied by the press leads to the compression of the blow moulded container. Force and compression are continuously measured. When the force is increased the compression is increased. In the beginning a linear correlation between force and compression is recorded. When the force is increased beyond the linear range, the blow moulded container is damaged and the relation between force and compression is no longer linear.

In the second part and according to the present invention the application of the force is terminated before a non-linear correlation between force and compression is recorded. Due to the termination of force the blow moulded container is not damaged and can be used as packaging unit after the test. In order to decide if a blow moulded container complies with respect to a requested top load performance, the linear correlation between force and compression is compared with stored data for the correlation between force and compression of acceptable containers. In practice the stored data provide a minimum and maximum slope of the force/compression relation for å pre-set time, depending from parameters such as material type, wall thickness and height of the blow moulded container. If the blow moulded container complies with the pre-set requirements, an accept signal is generated and the blow moulded container is not damaged and can be used as packaging unit. If the blow moulded container does not comply with the pre-set requirements a non-accept signal is generated which implies the disposal of the blow moulded container.

In a preferred embodiment the width and depth of the container are determined in addition to its height.

In another embodiment the typical duration of the linear correlation between force and compression is measured by increasing the force beyond the linear range. The duration is added to the stored data and may be used by a control unit to run different types force application combined with compression measurement.

In another embodiment the application of the force is terminated after less than 50% of the typical duration, more preferred less the 25% and most preferred less than 10%. The shorter the application of the force, the higher is the rate of measurement and the faster the distinguishing between acceptable and non-acceptable blow moulded containers. Industrially highly attractive rates of measurements do not exceed 0.1 seconds, but 0.5 seconds or 1 second might still be attractive. The larger a blow moulded container is, the more time for determining its compliance with respect to a requested top load performance is acceptable.

In yet another embodiment the application of the force is not terminated below 50% of the typical duration. Some types of blow moulded container may be made of expensive material or may be challenging to recycle in-house and thereby re-use the material. In such cases it is of considerable interest not to dispose containers, which are useful but receive a non-accept signal. Prolonged application of the force provides more exact data and thus reduces the number of false non-accept signals. A reduction to about zero is highly appreciated in such cases.

In another embodiment the method is performed with filled blow moulded containers or with filled and sealed blow moulded containers. In most cases the method will be used for empty containers, which frequently just have been blow moulded. However, in some cases the filled goods have an influence on the top load, for instance by partial migration into the walls of the blow moulded container, which may lead to a softening effect. In such cases it may be useful to perform the top load testing with filled blow moulded containers or with filled and sealed blow moulded containers.

The present invention comprises a device for performing the method for determining the compliance of blow moulded containers with respect to a requested top load performance. The device may comprise a control unit and may be designed for in-line testing of a continuous stream of blow moulded containers from a blow moulding machine.

Below, the invention will be descried in further detail in the form of non-limiting exemplary embodiments illustrated by drawings, where
Figure 1 shows a blow moulded container
Figure 2 shows a measuring head connected to a blow moulded container
Figure 3 shows a typical correlation of force/compression with a linear and non-linear part
Figure 4 shows a typical range of stored data with a minimum and maximum slope of the force/compression relation.

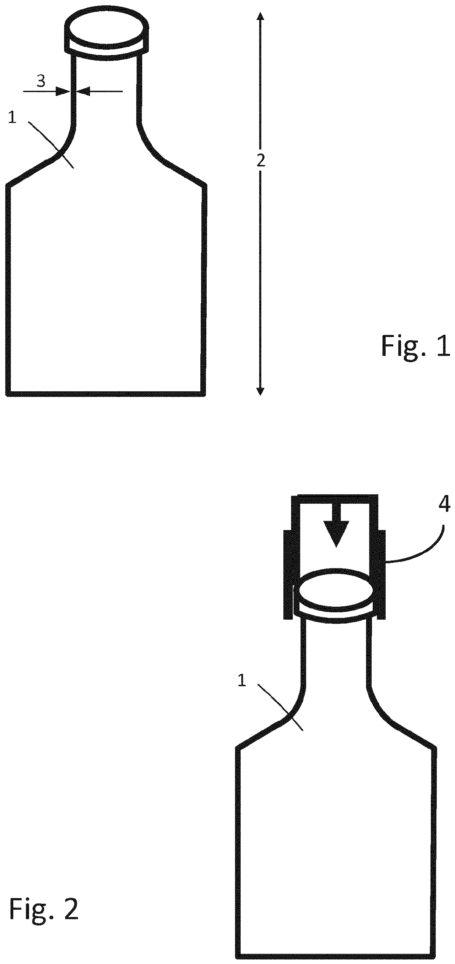

Figure 1 shows a blow moulded container (1). The height (2) of the blow moulded containers (1) is indicated, as well as its wall thickness (3). The blow moulded container (1) may be manufactured of different materials, all of which has influence on the force/compression data.

Figure 2 shows a measuring head (4) connected to a blow moulded container (1). The head (4) applies an increasing force to the blow moulded container (1) by pressing the movable connection part of the head (4) with increasing force onto the top of the blow moulded container (1).

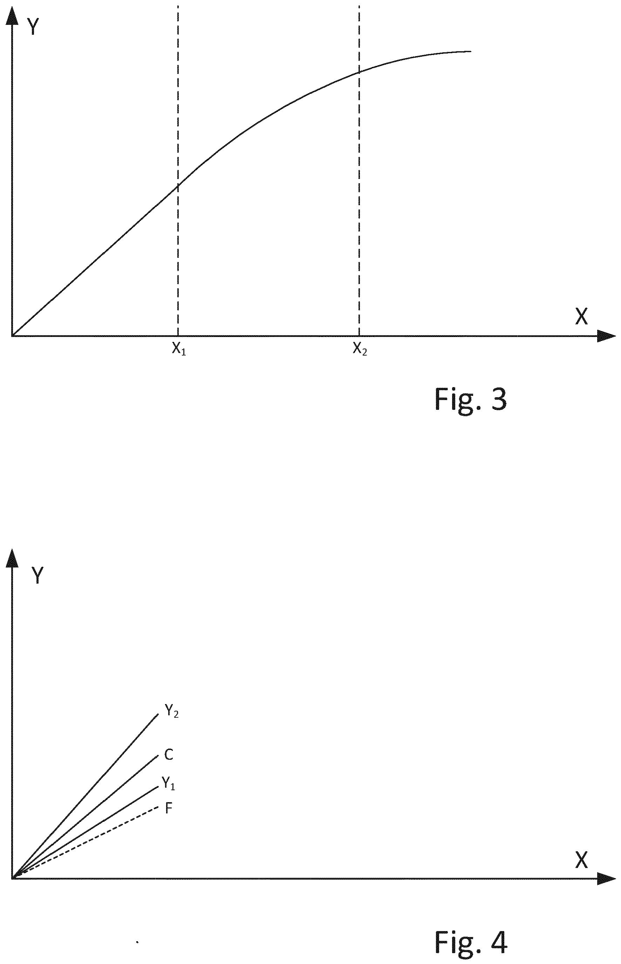

Figure 3 shows a plot of a typical correlation of force (Y) to compression (X) with a linear and non-linear part. X₁ is a compression within the linear part, X₂ is a compression within the non-linear part. In the linear part the blow moulded containers (1) is only slightly compressed and the compression is reversible. In the non-linear part the blow moulded containers (1) is severe compressed and the compression is not reversible.

Figure 4 shows a plot of different correlations of force (Y) to compression (X). The plot shows a typical range of stored data with a minimum (Y₁) and maximum (Y₂) slope of the force/compression correlation. The blow moulded containers (1) in figure 1 is initially only slightly compressed and it is this initial part of the force/compression relation, which is instrumental in the present invention. (C) shows the force/compression relation for an acceptable container and (F) for a non-acceptable container.

It should be noted that the drawings only present the principles of the present invention and that the scale of the drawings may deviate significantly from real-life embodiments.

## Claims

1. Method for determining the compliance of blow moulded containers with respect to a requested top load performance, comprising the following steps:
- determining the height of at least one blow moulded container (1)
- connecting of the at least on blow moulded container (1) with the top of at least one measuring head (4), designed to apply a force onto the top of the blow moulded container (1) and to continuously measure the compression of the blow moulded container (1),
- increasing the force,
- recording an initially linear correlation between force and compression,
**characterized in that** the application of the force is terminated while a linear correlation between force and compression is recorded, the linear correlation between force and compression is compared with stored data for the correlation between force and compression of acceptable containers and an accept or non-accept signal is generated which implies proceeding or disposal of the blow moulded container (1).

2. Method according to claim 1, **characterized in that** the width and depth of the container are determined in addition to its height (2).

3. Method according to claim 1 or 2, **characterized in that** a typical duration of the linear correlation between force and compression is comprised by the stored data.

4. Method according to claim 3, **characterized in that** the application of the force is terminated after less than 50% of the typical duration, more preferred less the 25% and most preferred less than 10%.

5. Method according to any of the preceding claims, **characterized in that** the application of the force is terminated after less than 1 second, more preferred less the 0.5 seconds and most preferred less than 0.1 seconds.

6. Method according to any of the preceding claims, **characterized in that** the application of the force is not terminated below 50% of the typical duration in order to reduce the number of false non-accept signals to about zero.

7. Method according to any of the preceding claims, **characterized in that** the method is performed with filled blow moulded containers (1).

8. Method according to any of the preceding claims, **characterized in that** the method is performed with filled and sealed blow moulded containers (1).

9. Device for determining the compliance of blow moulded containers (1) with respect to a requested top load performance, comprising the following:
- means determining the height of at least one blow moulded containers (1)
- measuring head (4) designed for connection with a top of at least on blow moulded container (1), designed for the application of a force onto the top of the blow moulded container (1), designed for continuous measurement of the compression of the blow moulded container, designed for increasing the force, and designed for recording an initially linear correlation between force and compression,
**characterized in that** the apparatus is further designed for the
- termination of the applied force before the recording of a non-linear correlation between force and compression,
- comparison of the linear correlation between force and compression with stored data for the correlation between force and compression of acceptable containers and
- generation and output of an accept or non-accept signal, which implies proceeding or disposal of the blow moulded container (1).

10. Device according to claim 9, **characterized in that** the device comprises a control unit and is designed for in-line testing of a continuous stream of blow moulded containers (1) from a blow moulding machine.
